# EUROPEAN PATENT SPECIFICATION

(11) **EP 3 243 929 B1**
(45) Date of publication and mention of the grant of the patent: **26.06.2019**
(21) Application number: 15876896.0
(22) Date of filing: 20.05.2015
(51) Int. Cl.: C23C 24/08, B32B 15/04, F01N 13/14, F01L 3/04

(54) **METAL MEMBER WITH COAT LAYER**
METALLELEMENT MIT BESCHICHTUNGSSCHICHT
ÉLÉMENT MÉTALLIQUE AVEC COUCHE DE REVÊTEMENT

(30) Priority: 05.01.2015 JP 2015000370
(43) Date of publication of application: 15.11.2017
(73) Proprietor: IBIDEN CO., LTD., Ogaki-shi Gifu 503-8604 (JP)
(72) Inventor: MUTSUDA, Fumiyuki, Ibi-gun Gifu 501-0695 (JP)
(74) Representative: Winter, Brandl, Fürniss, Hübner, Röss, Kaiser, Polte - Partnerschaft mbB
(86) International application number: PCT/JP2015/064478
(87) International publication number: WO 2016/111023

(56) References cited:
- WO-A1-2012/093697
- WO-A1-2014/034395
- JP-A- H0 782 019
- JP-A- S6 268 658
- JP-A- H06 287 052
- JP-A- 2012 164 638
- JP-A- 2012 167 543
- JP-B2- 3 617 765

## Description

### TECHNICAL FIELD

The present invention relates to a coated metal member.

### BACKGROUND ART

In vehicles such as automobiles with engines, a large amount of heat is generated in the engine area. The generated heat is easily diffused into the surrounding area via engine components. The generated heat is not always fully utilized at the present time.

Thus, studies have been actively conducted to effectively utilize the heat generated in the engine and to further improve properties such as fuel economy. Attempts have also been made to thermally insulate the engine and its peripheral components to reduce thermal loss.

As a technique of thermally insulating engine peripheral components to improve the thermal insulation of exhaust pipes providing a passage of exhaust gas emitted from the engine, Patent Literature 1 discloses a technique of applying a coating material containing an amorphous inorganic material and a crystalline inorganic material to a metal base and providing a thermal insulation coating to the metal base.

### CITATION LIST

### - Patent Literature

Patent Literature 1: WO 2014/034395

### SUMMARY OF INVENTION

### - Technical Problem

In the above technique, carbon particles as a pore-forming agent are added to the coating material, and the carbon particles are gasified to form pores in a coat layer so as to reduce the thermal conductivity of the coat layer, so that the coat layer has excellent thermal insulation properties.

In the above technique, the pores in the coat layer are also effective in interfering with the growth of a crack when a micro-crack is generated in the coat layer due to thermal shock or the like during the course of production. Yet, pores having a large pore size unfortunately create an uneven distribution of the strength of the coat layer, thus reducing the strength of the coat layer.

The present invention was made in view of the above problem, and aims to provide a coated metal member having excellent thermal insulation properties and including a coat layer having high strength.

### - Solution to Problem

To achieve the above object, the present invention provides:
a coated metal member including a metal base and a coat layer made of an amorphous inorganic material formed on the metal base, the coat layer containing pores and carbon particles, wherein the amount of the carbon particles is 0.005 to 1 part by weight relative to the total 100 parts by weight of the coat layer, wherein the pores in the coat layer have an average pore size of 0.5 to 15 µm, and wherein the porosity of the coat layer is 10 to 60%.

In the coated metal member of the present invention, the coat layer contains pores and carbon particles. According to the findings of the present inventor, when the coat layer contains carbon particles, even if a micro-crack is generated in the coat layer, the pores and the carbon particles will interfere with the growth of a crack, making the coat layer less susceptible to breakage from thermal shock or the like.

The pores in the coat layer reduce the thermal conductivity of the coat layer. As a result, the coat layer has excellent thermal insulation properties.

Thus, providing pores and carbon particles in the coat layer enables achievement of a coated metal member having excellent thermal insulation properties and including a coat layer having high strength.

In the coated metal member of the present invention, the carbon particles are preferably particles of residual carbon derived from a pore-forming material used to form pores.

The presence of the carbon particles as particles of residual carbon derived from a pore-forming material suggests that when the pore-forming material is heated to form pores in the coat layer, the heating is performed only to an extent at which a portion of the carbon particles is not gasified. In this case, it is considered that the growth of the pores has not progressed because the heating temperature is not so high and the heating time is not so long, resulting in a dispersion of pores having a small pore size in the coat layer.

With the pores having a small pore size being dispersed in the coat layer, the coat layer has a higher strength than a coat layer containing large pores. In addition, the convective heat transfer in the pores is suppressed, which improves the thermal insulation effect.

In the coated metal member of the present invention, the amount of the carbon particles is 0.005 to 1 part by weight relative to the total 100 parts by weight of the coat layer.

In the coated metal member of the present invention, the coat layer preferably contains no large pores having a pore size larger than 45 µm.

When no large pores are present, the growth of a crack is likely to be interfered with, and the coat layer is thus less susceptible to breakage from thermal shock.

In addition, the wall thickness between the pores can be increased as compared to the case where the large pores are present. This increases the strength of the thermal insulation layer as a whole. In addition, since the pores have a small pore size, the convective heat transfer in the pores is suppressed, which improves the thermal insulation effect.

In the coated metal member of the present invention, the coat layer preferably further contains a crystalline inorganic material.

The crystalline inorganic material has excellent heat resistance, serves a role in mechanically reinforcing the coat layer made of an amorphous inorganic material, and can prevent cracks from occurring due to deterioration of the mechanical strength of the coat layer. The crystalline inorganic material can also improve the adhesion between the base and the coat layer.

In the coated metal member of the present invention, the crystalline inorganic material is preferably at least one oxide selected from the group consisting of zirconia, yttria, calcia, magnesia, ceria, alumina, titania, niobium oxide, and hafnia.

These oxides serve a role in mechanically reinforcing the coat layer made of an amorphous inorganic material, and thus can prevent cracks from occurring due to deterioration of the mechanical strength of the coat layer.

In the coated metal member of the present invention, the crystalline inorganic material is preferably an oxide of at least one metal selected from the group consisting of manganese, iron, cobalt, copper, chromium, and nickel.

The use of an oxide of at least one of these metals as a crystalline inorganic material can improve the adhesion between the coat layer and the base.

In the coated metal member of the present invention, the pores in the coat layer have an average pore size of 0.5 to 15 µm.

When the average pore size of the pores is in the above range, these pores are present as closed pores in the coat layer and effectively function as a structure to improve the thermal insulation.

In the coated metal member of the present invention, the coat layer preferably has a thickness of 50 to 1000 µm.

When the thickness of the coat layer is in the above range, the coat layer is not too thin, so that the coat layer can sufficiently exert the thermal insulation effect. At the same time, the coat layer is not too thick, so that the coat layer is less susceptible to breakage.

### BRIEF DESCRIPTION OF DRAWINGS

Fig. 1 is a schematic cross-sectional view of an example of a coated metal member of the present invention.
Fig. 2 is a schematic cross-sectional view of a sample for measurement of the strength of a coat layer.
Fig. 3 is an external view of a tensile test using a tensile testing machine.

### DESCRIPTION OF EMBODIMENTS

A coated metal member of the present invention is specifically described below. The present invention is not limited to the following embodiments. Combinations of two or more preferred embodiments of the present invention described below are also encompassed by the present invention.

The coated metal member of the present invention includes a metal base and a coat layer made of an amorphous inorganic material formed on the metal base, the coat layer containing pores and carbon particles.

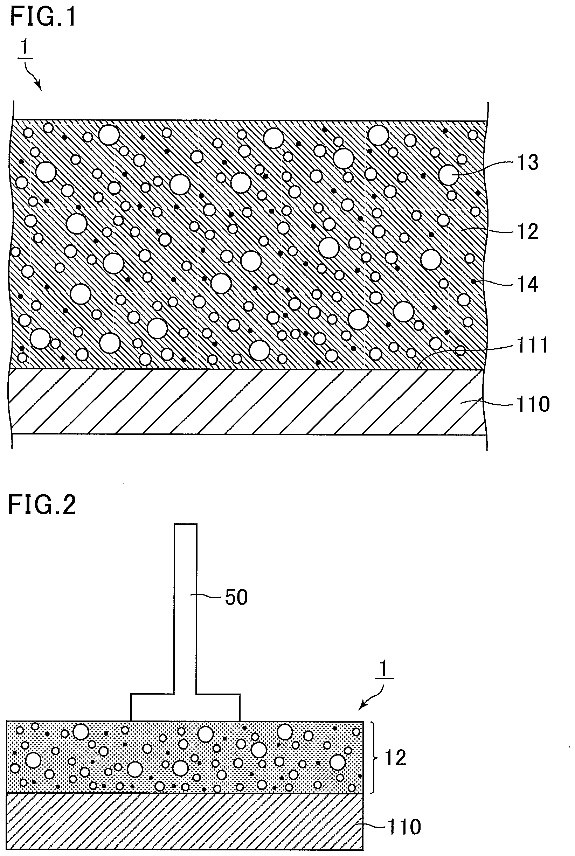

Fig. 1 is a schematic cross-sectional view of an example of the coated metal member of the present invention.

A coated metal member 1 shown in Fig. 1 includes a metal base 110 and a coat layer 12 formed thereon. The coat layer 12 contains pores 13 and carbon particles 14.

Examples of the metal base include stainless steel, heat-resistant steel (SUH), aluminum, aluminum alloy, iron, Inconel, Hastelloy, and invar. Examples thereof also include various castings (such as cast iron, cast steel, and carbon steel).

Specific examples of the heat-resistant steel (SUH) include martensite heat-resistant steel (such as SUH 3 and SUH 11), austenite heat-resistant steel (such as SUH 35), and ferrite heat-resistant steel (such as SUH 446). Examples thereof also include Ni-group heat-resistant alloy of Inconel (such as NCF 751).

Examples of the aluminum alloy include pure aluminum (1000 series), Al-Cu alloy (2000 series), Al-Mn alloy (3000 series), Al-Si alloy (4000 series), Al-Mg alloy (5000 series), Al-Mg-Si alloy (6000 series), and Al-Zn-Mg alloy (7000 series). The composition of any of these alloys is not particularly limited.

In addition, the aluminum or aluminum alloy may have an anodized surface.

A sandblast treatment or a roughening treatment using a chemical agent may have been performed on a surface 111 of the base 110 to provide a good adhesion between the base and the coat layer.

The surface roughness Rz_{JIS} on the surface of the base obtained by the roughening treatment is preferably 0.3 to 20 µm. The surface roughness Rz_{JIS} is a ten-point average roughness defined in JIS B 0601 (2001).

If the surface roughness Rz_{JIS} on the surface of the base is less than 0.3 µm, the base will have a small surface area. Thus, it will be difficult to provide a sufficient adhesion between the surface of the base and the coat layer. In contrast, if the surface roughness Rz_{JIS} on the surface of the base is more than 20 µm, it will be difficult to form a coat layer on such surface of the base. The reason for this is presumed as follows: if the surface roughness Rz_{JIS} on the surface of the base is too high, when slurry (a composition to form the coat layer) is applied to the surface of the base having projections and depressions formed thereon, the slurry will not enter the depressions, forming voids at these portions.

The surface roughness Rz_{JIS} on the surface of the base can be measured according to JIS B 0601 (2001) using Handysurf E-35B available from Tokyo Seimitsu Co., Ltd.

The measurement is performed at 25°C under atmospheric pressure.

The base may have any shape such as a flat plate shape, semi-cylindrical shape, or cylindrical shape. The outer edge of its cross-section may have any shape such as an elliptical shape or polygonal shape. The base may have a shape of a specific component such as an engine and its component.

If the base is tubular, the diameter of the base may not be longitudinally consistent. Likewise, the cross-sectional shape perpendicular to the longitudinal direction may not be longitudinally consistent.

The lower limit of the thickness of the base is preferably 0.2 mm, more preferably 0.4 mm. The upper limit thereof is preferably 10 mm, more preferably 4 mm.

If the thickness of the base is less than 0.2 mm, the coated metal member will be insufficient in strength. In contrast, if the thickness of the base is more than 10 mm, the coated metal member will have an increased weight and will be less applicable to practical use.

The coat layer 12 is made of an amorphous inorganic material.

The amorphous inorganic material is preferably glass, more preferably low softening point glass having a softening point of 300°C to 1000°C.

Examples of the low softening point glass having a softening point of 300°C to 1000°C include SiO₂-B₂O₃-ZnO glass, SiO₂-B₂O₃-Bi₂O₃ glass, SiO₂-PbO glass, SiO₂-PbO-B₂O₃ glass, SiO₂-B₂O₃-PbO glass, B₂O₃-ZnO-PbO glass, B₂O₃-ZnO-Bi₂O₃ glass, B₂O₃-Bi₂O₃ glass, B₂O₃-ZnO glass, BaO-SiO₂ glass, SiO₂-B₂O₃-RO glass, and SiO₂-B₂O₃-R₂O glass (R is a transition metal).

The softening point can be measured according to the method specified in JIS R 3103-1:2001 using, for example, an automatic measuring apparatus of glass softening and strain points (SSPM-31) available from OPT Corporation. The measurement is performed under atmospheric pressure.

The coat layer preferably further contains a crystalline inorganic material in addition to the amorphous inorganic material.

The crystalline inorganic material is preferably at least one oxide selected from the group consisting of zirconia, yttria, calcia, magnesia, ceria, alumina, titania, niobium oxide, and hafnia.

The crystalline inorganic material is preferably an oxide of at least one metal selected from the group consisting of manganese, iron, cobalt, copper, chromium, and nickel.

In Fig. 1, the coat layer 12 is depicted as a layer in which the amorphous inorganic material and the crystalline inorganic material are mixed therein without being distinguished from one another.

The crystalline inorganic material content in the coat layer is preferably 1 to 50% by weight, more preferably 10 to 45% by weight, relative to the weight of the coat layer.

The coat layer 12 contains the pores 13.

The pores in the coat layer have an average pore size of 0.5 to 15 µm.

The average pore size is preferably 3 to 13 µm, more preferably 5 to 10 µm.

When the pores have an average pore size of 0.5 to 15 µm, these pores are present as closed pores in the coat layer and effectively function as a structure to improve the thermal insulation.

The porosity of the coat layer is 10 to 60%.

The porosity is preferably 15 to 50%, more preferably 20 to 40%.

With a porosity of 10 to 60%, sufficient thermal insulation provided by the pores is maintained.

The average pore size of the pores can be measured by cutting the coated metal member and observing a cross-section using a SEM or the like.

Specifically, a SEM image is taken such that the entire region of the coat layer in the thickness direction fits in the view, and the image taken is divided into nine regions. The pore size is measured for all the pores in each region, and the measurements are averaged to determine an average pore size. In the case of a pore not having a generally spherical shape, the projected area diameter (Heywood diameter) of the pore is defined as the diameter.

In addition, the porosity of the coat layer can be calculated as follows: the bulk density is calculated from the weight of the coat layer and the thickness of the coat layer measured with a coating thickness gauge (dual scope); the ratio of the bulk density to the true density measured with a pycnometer is calculated; the obtained value is subtracted from 1; and the obtained value expressed in percentage is regarded as the porosity.

The magnification for SEM observation is 2000 times for the thickness of the coat layer of 5 µm or more and less than 50 µm, 1000 times for the thickness of the coat layer of 50 µm or more and less than 100 µm, 500 times for the thickness of the coat layer of 100 µm or more and less than 300 µm, 200 times for the thickness of the coat layer of 300 µm or more and less than 500 µm, 150 times for the thickness of the coat layer of 500 µm or more and less than 1000 µm, and 100 times for the thickness of the coat layer of 1000 µm or more and less than 2000 µm.

The coat layer 12 contains carbon particles.

Fig. 1 shows the presence of the carbon particles 14 in the coat layer 12.

The amount of the carbon particles is 0.005 to 1 part by weight, preferably 0.008 to 1 part by weight, relative to the total 100 parts by weight of the coat layer.

The amount of the carbon particles can be measured by separating the coat layer, melting the amorphous inorganic material constituting the coat layer, passing the obtained solution through a filter, and quantifying residual carbon particles by a combustion-infrared absorption method.

When the amorphous inorganic material is glass, the amorphous inorganic material can be melted using hydrochloric acid or hydrofluoric acid.

In the case where the amorphous inorganic material is melted by the above method and no residual carbon particles are obtained after filtration of the solution, it is assumed that no carbon particles are contained in the coat layer.

The carbon particles are particles capable of forming pores as they are gasified by the heating treatment, and the carbon particles are preferably derived from a pore-forming material used to form pores. The pore-forming material is a material that is added for forming pores in the coat layer in the course of production of the coated metal member. A portion of the carbon particles added remains in the coat layer.

A portion of the carbon particles is allowed to remain without being gasified so that the carbon particles will interfere with the growth of a crack. This produces an effect of making the coat layer less susceptible to breakage from thermal shock.

Specific preferred examples of the carbon particles include graphite particles. Specifically, ET-10 available from Ibiden Co., Ltd, pitch, coke, and the like are preferably used.

The carbon particles preferably have an average particle diameter of 0.1 to 30 µm.

The coat layer preferably has a thickness of 50 to 1000 µm.

The thickness of the coat layer can be measured by cutting the coated metal member and observing a cross-section using a SEM or the like.

When the thickness of the coat layer is in the above range, the coat layer is not too thin, so that the coat layer can sufficiently exert the thermal insulation effect. At the same time, the coat layer is not too thick, so that the coat layer is less susceptible to breakage.

The coat layer preferably has a thermal conductivity at room temperature of 0.1 to 1.0 W/m·K.

If the thermal conductivity is lower than 0.1 W/m·K, a higher porosity will be necessary to achieve the above thermal conductivity, so that the mechanical strength of the obtained coat layer may be too low. In contrast, if the thermal conductivity is higher than 1.0 W/m·K, unfortunately, the thermal insulation effect will be insufficient.

The thermal conductivity is measured according to JIS R 1611 (2010) using a laser flash apparatus (a thermal constant measurement apparatus: NETZSCH LFA 457 Microflash).

The measurement is performed at 25°C under atmospheric pressure.

The coat layer preferably has a strength of 15 to 50 MPa.

The strength of the coat layer can be measured as described below.

The carbon particles in the coat layer can increase the strength of the coat layer.

Fig. 2 is a schematic cross-sectional view of a sample for measurement of the strength of the coat layer.

A stud 50 is attached using a clip to a surface of the coat layer 12 of the coated metal member 1, and is fixed to the surface by heating at 150°C for 1 hour to prepare a measurement sample.

The stud 50 may be one available from Quad Group Inc. (P/N 901106, 2.7-mm long stud made of aluminium with epoxy adhesive).

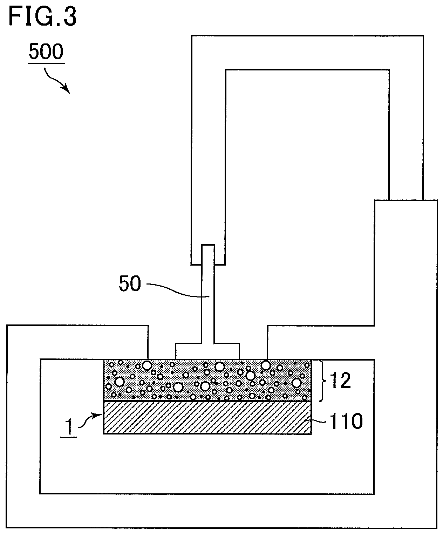

Fig. 3 is an external view of a tensile test using a tensile testing machine.

A tensile testing machine 500 is used to pull the stud 50 fixed to the coat layer 12. The strength of the coat layer is calculated from the maximum value of the force applied until the coat layer 12 in contact with the stud 50 is separated from the base 110 and the cross-sectional area of the stud 50. The tensile testing machine 500 may be Autograph AGS 50A available from Shimadzu Corporation.

The measurement is performed at 25°C under atmospheric pressure.

The coat layer preferably has a specific heat of 650 to 900 J/kgK.

The specific heat can be measured by differential scanning calorimetry (DSC).

In addition, the heat capacity (heat capacity per unit area) of the coat layer is preferably 50 to 600 (J/m²·K). The heat capacity of the coat layer can be calculated by multiplying the specific heat, density, and thickness of the coat layer.

The coated metal member of the present invention can be used for a component where a metal member is used and which requires thermal insulation. Its use is not particularly limited.

Examples of uses include engine components as automobile-related components, such as engine valves, cylinders, and pistons, each of these metal members being provided with a coat layer on a side facing an engine combustion chamber. Of these, the coated metal member can be preferably used as an engine valve whose head is provided with a coat layer on its upper and/or under surface.

Examples of other uses include engine peripheral components as automobile-related components, such as inlet ports and exhaust ports, each of these metal members being provided with a coat layer on a side to be exposed to gas.

The coated metal member of the present invention can also be used as a member of an automobile exhaust pipe. In this case, the coat layer may be provided on the inner surface or outer surface of a tubular exhaust pipe, or on both the inner and outer surfaces.

Other than automobile uses, the coated metal member of the present invention can also be used as a member for use in high temperature equipment such as gas turbines.

Next, an example of the method for producing the coated metal member of the present invention is described.

### (a) Preparation of base

First, a metal base is provided as a material of a coated metal member.

Properties such as shape and material of the metal base are as described above for the coated metal member of the present invention. Thus, the description thereof is omitted here.

For preparation of a base, the base is preferably subjected to a washing treatment to remove impurities from its surface on which a coat layer is to be formed.

The washing treatment may be performed by any known washing treatment method. Specific examples include a method such as ultrasonic washing in an alcohol solvent.

If it is desired to further improve the adhesion between the base and the coat layer, the surface of the base may be subjected to a roughening treatment. Examples of the roughening treatment method include a sandblast treatment, an etching treatment, and a high-temperature oxidation treatment. These treatments may be employed alone or in combination of two or more thereof. An additional washing treatment may be performed after the roughening treatment.

The roughening treatment is preferably performed before a coating formation step (described later).

When the base is aluminum alloy, the surface of the base may be anodized, if necessary.

The anodizing treatment can form an anodized layer on the surface of the base to further improve the adhesion between the base and the coat layer.

When partially anodizing the base, it is preferred to cover a portion not to be anodized with masking tape or the like.

The anodizing treatment is preferably performed before the coating formation step (described later).

An electrolytic bath for anodization includes an acidic bath, an alkaline bath, and a non-aqueous bath (such as a boric acid bath or a formamide bath). The acidic bath may be an aqueous solution in which one or two kinds or more of compounds such as sulfuric acid, phosphoric acid, chromic acid, oxalic acid, sulfosalicylic acid, pyrophosphoric acid, sulfamic acid, phosphomolybdic acid, boric acid, malonic acid, succinic acid, maleic acid, citric acid, tartaric acid, phthalic acid, itaconic acid, malic acid, and glycolic acid are dissolved.

The alkaline bath may be an aqueous solution in which one or two kinds or more of compounds such as sodium hydroxide, potassium hydroxide, sodium carbonate, potassium phosphate, and ammonia water are dissolved.

It is preferred to perform the anodizing treatment to form an anodized layer having a thickness of 0.2 to 100 µm on the surface of the base.

### (b) Coating formation step

### (b-1) Raw material mixture preparation step

Subsequently, an amorphous inorganic material and carbon particles are mixed to obtain a raw material mixture for forming a coating.

The amorphous inorganic material and the carbon particles are as described above for the coated metal member of the present invention. Thus, the description thereof is omitted here.

The raw material mixture can be obtained, for example, by wet mixing an amorphous inorganic material, carbon particles, and water in a ball mill or the like. The order of mixing and combination of the above three components are not particularly limited. For example, the carbon particles may be added to a mixture of the amorphous inorganic material and water; water may be added to a mixture of the amorphous inorganic material and the carbon particle; or the amorphous inorganic material, the carbon particles, and water may be mixed altogether at once.

The carbon particles in the raw material mixture generate CO and CO₂ by combustion in the subsequent firing step, thus forming pores. In other words, the carbon particles function as a pore-forming agent.

In addition, a portion of the carbon particles remains in the coat layer after the firing step.

The mixing ratio of the amorphous inorganic material and water is not particularly limited. Yet, it is preferred to add about 100 parts by weight of water to 100 parts by weight of the amorphous inorganic material. Mixing the amorphous inorganic material and water in the above weight ratio is preferred because it tends to give a mixture having a viscosity suitable for application to the base. The raw material mixture may also contain a dispersion medium such as an organic solvent and an organic binder, if necessary.

The dispersion medium may be, for example, water or an organic solvent such as methanol, ethanol, or acetone. The dispersion medium content in the raw material mixture is not particularly limited, but the dispersion medium is preferably contained in an amount of 50 to 150 parts by weight relative to 100 parts by weight of the amorphous inorganic material. Adding the dispersion medium in the above weight ratio is preferred because the resulting raw material mixture has a viscosity suitable for application to the base.

Examples of the organic binder include polyvinyl alcohol, methyl cellulose, ethyl cellulose, and carboxymethyl cellulose. These may be used alone or in combination of two or more thereof. The dispersion medium and the organic binder may be used in combination.

The carbon particle content in the raw material mixture is preferably adjusted to be 0.01 to 10 parts by weight relative to 100 parts by weight of the amorphous inorganic material.

The carbon particle content is more preferably 0.05 to 8 parts by weight, still more preferably 0.08 to 5 parts by weight.

With the carbon particle content in the above range, many pores will be formed, so that a desired porosity can be obtained without allowing pores to sufficiently grow, and the coat layer having suitable thermal insulation can be formed.

The pores are not allowed to sufficiently grow, so that each pore is small, and a long heating time for growth of pores is unnecessary, thus achieving a uniform degree of formation of the pores, and the coat layer having a sharp pore size distribution can be formed.

In addition, since the carbon particles are added in a relatively large amount, a portion of the carbon particles will remain in the coat layer without being gasified.

The raw material mixture may further contain a crystalline inorganic material, if necessary.

In the case of adding a crystalline inorganic material to the raw material mixture, the timing for adding the crystalline inorganic material is not particularly limited. For example, the method may include a step of mixing the amorphous inorganic material and a crystalline inorganic material before the above-mentioned mixing of the amorphous inorganic material, the carbon particles, and water.

The crystalline inorganic material is as described above for the coated metal member of the present invention. Thus, the description thereof is omitted here.

In the case of further adding a crystalline inorganic material to the raw material mixture, the method may include a step of mixing the amorphous inorganic material and a crystalline inorganic material before the above-mentioned mixing of the amorphous inorganic material, the carbon particles, and water.

### (b-2) Coating step

Next, the raw material mixture for forming a coat layer is applied to a surface of the base to form a coating that forms a coat layer (coating step).

The thickness of the coating is not particularly limited, but it is preferably 50 to 1000 µm. The coating is preferably thick enough to form a coat layer having a thickness of 50 to 1000 µm.

The coating having a thickness in the above range can form a coat layer that is not too thin, so that the coat layer can sufficiently exert the thermal insulation effect. At the same time, the coat layer is not too thick, so that the coat layer is less susceptible to breakage.

Examples of methods for forming the coating on the surface of the base include spray coating, electrostatic coating, inkjet printing, spin coating, transfer printing using stamps, rollers, or the like, and brush coating.

### (c) Heating treatment step

Next, the base having a coating formed thereon is subjected to a heating treatment to gasify a portion of the carbon particles in the coating to form a coat layer and pores in the coat layer (heating treatment step).

In this step, a portion of the carbon particles remains as carbon particles in the coat layer without being gasified.

For the heating treatment, the base having a coating formed thereon may be dried at a temperature of about 50°C to 150°C, if necessary, before the heating treatment at a high temperature.

The conditions of the heating treatment step are not particularly limited and can be suitably set in view of materials of the base and the like. Yet, the heating temperature is preferably 400°C to 1100°C for the base made of stainless steel, 400°C to 1100°C for the base made of heat-resistant steel, and 300°C to 650°C for the base made of aluminum alloy. The heating time is preferably 3 to 120 minutes.

The heating treatment temperature is preferably equal to or higher than the softening point of the amorphous inorganic material. The heating temperature equal to or higher than the softening point of the amorphous inorganic material causes the applied amorphous inorganic material to be softened and melted to provide a strong adhesion between the coat layer formed and the base.

At this point, the carbon particles in the raw material mixture are dispersed in the softened amorphous inorganic material and undergo thermal decomposition, resulting in the formation of pores.

In addition, if the pores are exposed on the surface of the coat layer in the heating treatment step, the amorphous inorganic material for forming the coat layer, which has been softened, can quickly cover the portions where the pores are exposed. Thus, no pores are exposed on the surface of the coat layer after firing, and the coat layer having high flatness (low surface roughness) can be obtained.

The conditions of the heating treatment step are adjusted in terms of the added amount of the carbon particles, intended pore size, porosity, and the like, so that the heating treatment is performed under conditions at which a portion of the carbon particles will not be gasified and will remain in the coat layer.

The heating treatment is performed moderately, so that the coat layer containing uniformly dispersed pores can be formed.

The coated metal member can be produced through the above steps.

The effects of the coated metal member of the present invention are listed below.
(1) In the coated metal member of the present invention, the coat layer contains pores and carbon particles. When the coat layer contains carbon particles, even if a micro-crack is generated in the coat layer, the pores and the carbon particles will interfere with the growth of a crack, making the coat layer less susceptible to breakage from thermal shock or the like.
   The pores in the coat layer also reduce the thermal conductivity of the coat layer, so that the coat layer has excellent thermal insulation properties.
   Thus, providing pores and carbon particles in the coat layer enables achievement of a coated metal member having excellent thermal insulation properties and including a coat layer having high strength.
(2) In the coated metal member of the present invention, the carbon particles are particles of residual carbon derived from a pore-forming material used to form pores. This suggests that when the pore-forming material is heated to form pores in the coat layer, the heating is performed at a temperature at which a portion of the carbon particles is not gasified. In this case, it is considered that the growth of the pores has not progressed because the heating temperature is not so high and the heating time is not so long, resulting in a dispersion of pores having a small pore size in the coat layer.
   With the pores having a small pore size being dispersed in the coat layer, the coat layer has a higher strength than a coat layer containing large pores. In addition, the convective heat transfer in the pores is suppressed, which improves the thermal insulation effect.
(3) When the coated metal member of the present invention contains a crystalline inorganic material in the coat layer, the crystalline inorganic material having excellent heat resistance serves a role in mechanically reinforcing the coat layer made of an amorphous inorganic material, and can prevent cracks from occurring due to deterioration of the mechanical strength of the coat layer. The crystalline inorganic material can also improve the adhesion between the base and the coat layer.
(4) In the coated metal member of the present invention, when the pores in the coat layer have an average pore size of 0.5 to 15 µm, these pores are present as closed pores in the coat layer and effectively function as a structure to improve the thermal insulation.
(5) In the coated metal member of the present invention, when the coat layer has a thickness of 50 to 1000 µm, the coat layer is not too thin, so that the coat layer can sufficiently exert the thermal insulation effect. At the same time, the coat layer is not too thick, so that the coat layer is less susceptible to breakage.

### EXAMPLES

The present invention is described more specifically below with reference to the examples, but the present invention is not limited to these examples only.

### (Example 1)

### (1) Preparation of base

An engine valve (inlet valve) made of stainless steel (SUS 430) was provided as a base, which was ultrasonically washed in an alcohol solvent. Subsequently, a valve head was roughened by a sandblast treatment. The sandblast treatment was performed for 10 minutes using #100 Al₂O₃ abrasive grains.

A surface roughness gauge (Handysurf E-35B available from Tokyo Seimitsu Co., Ltd.) was used to measure the surface roughness on the surface of the engine valve head (i.e., the surface of the base), and the surface roughness Rz_{JIS} was 5 µm. The measurement was performed at 25°C under atmospheric pressure.

### (2) Coating formation step

As a powdered amorphous inorganic material, 100 parts by weight of barium silicate glass (softening point of 770°C) was provided.

As an organic binder, 1 part by weight of methyl cellulose available from Shin-Etsu Chemical Co., Ltd. (product name: METOLOSE-65SH) was provided.

In addition, 2.3 parts by weight of carbon particles (carbonaceous) that had undergone a first firing were provided.

Then, 100 parts by weight of water was added to these components (100 parts by weight of the powdered amorphous inorganic material, 1 part by weight of the organic binder, and 2.3 parts by weight of the carbon particles), and these components were wet-mixed in a ball mill to prepare a raw material mixture.

The raw material mixture prepared was applied to the valve head of the inlet valve by spray coating.

### (3) Heating treatment step

Subsequently, the inlet valve was dried in a dryer at 70°C for 20 minutes.

Further, a heating treatment was performed in a firing furnace at 800°C in air for 90 minutes. Thus, a coat layer having a thickness of 500 µm was formed on the valve head of the inlet valve, and a coated metal member was produced.

### (Comparative Example 1)

A coat layer was formed in the same manner as in Example 1, except that no carbon particles were added and the heating treatment in the firing furnace was performed at 800°C for 120 minutes. Thus, a coated metal member was produced.

### (Evaluation of the coated metal member)

The coated metal members produced in the example and the comparative example were evaluated for their properties by the following procedure.

### (Measurement of the thickness, porosity, and average pore size of coat layer)

The thickness of each coat layer was measured using a dual scope "MP40" available from Fischer Instruments K.K. The thickness of the coat layer was corrected with arbitrarily selected 30 points. Then, the thickness of the coat layer was measured at 10 points, and the measured values were averaged. In the case of measuring the thickness of the coat layer at 10 points, it is preferred to arbitrarily select 10 points in such a manner that these measurements points are not disproportionately located in the measurement area. For example, the measurement may be performed at regular intervals of 1 mm.

In addition, the density of the coat layer was measured with a pycnometer "Pentapyc 5200e" available from Quantachrome Instruments Japan G.K.

The bulk density was calculated from the thickness of the coat layer, and the ratio of the bulk density to the true density measured with the pycnometer was calculated. Then, the obtained value was subtracted from 1, and the obtained value expressed in percentage was determined as the porosity.

Each of the coated metal members produced in the example and the comparative example was cut perpendicularly to the surface, and five cross-sections thereof were randomly selected and an SEM image of each cross-section was taken.

All the pores having a pore size of 0.1 µm or larger were measured for size (pore size), and the obtained values were averaged to determine the average pore size. Table 1 shows the results.

### (Measurement of the amount of carbon particles)

The amount of the carbon particles was measured by separating the coat layer, melting the amorphous inorganic material constituting the coat layer with hydrochloric acid, passing the obtained solution through a filter, and quantifying residual carbon particles by a combustion-infrared absorption method.

The measurement by the combustion-infrared absorption method was performed using a carbon sulfur analyzer (CSLS600 available from LECO Corporation) as a measurement apparatus.

As a pre-treatment (removal of interfering components), SiO₂ as a glass component constituting the coat layer was removed by heating in the presence of HF.

During the measurement, the carbon particles were burned in the presence of high purity iron in a highfrequency induction heating furnace while oxygen gas was supplied thereto.

The amount of the carbon particles was expressed in parts by weight relative to the total 100 parts by weight of the coat layer.

Table 1 shows the results.

### (Measurement of thermal conductivity)

The raw material mixtures prepared in the coating formation step of the example and the comparative example were separately applied to a SUS plate, and the heating treatment was performed under the same conditions in the example and the comparative example. Thus, test pieces for measurement of the thermal conductivity were produced.

These test pieces for measurement of the thermal conductivity were produced to have the same thickness in the example and the comparative example.

These test pieces were measured according to JIS R 1611 (2010) using a laser flash apparatus (a thermal constant measurement apparatus: NETZSCH LFA 457 Microflash). Thus, the thermal conductivity of each coat layer in the thickness direction was measured. Table 1 shows the results.

The measurement was performed at 25°C under atmospheric pressure.

### (Thermal shock test)

The raw material mixtures prepared in the coating formation step of the example and the comparative example were separately applied to a SUS 430 plate having a size of 40 cm (vertical) × 40 cm (horizontal) × 2 mm (thickness) and the heating treatment was performed under the same conditions in the example and the comparative example. Thus, test pieces for thermal shock test were produced.

These test pieces were heated at 500°C and dropped into water at 25°C to apply thermal shock thereto. This thermal shock test was repeated 10 times to check for separation of the coat layer of each test piece.

**[Table 1]**

| | Production conditions | | | | | Properties of coat layer | | | | | |
|---|---|---|---|---|---|---|---|---|---|---|---|
| | Base | Amorphous Inorganic material | Added amount of carbon particles ( 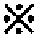 ) | Firing temperature [°C]) | Firing time (min] | Thickness of coat layer [*µ*m] | Porosity [%] | Average pore size [*µ*m] | Amount of carbon particles [parts by weight] | Thermal conductivity [W/mK] | Thermal shock test |
| Exmple 1 | SUS 430 | Barium silicate glass | 2.3 | 800 | 90 | 500 | 40 | 5 | 0.69 | 0.1 | Separation of coat layer did not occur. |
| Comparative Example 1 | SUS 430 | Barium silicate glass | 0 | 800 | 120 | 500 | 40 | 40 | 0 | 0.4 | Separation of coat layer occured. |

| | | | | | | | | | | | |
|---|---|---|---|---|---|---|---|---|---|---|---|
| ( 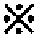 ) The added amount of carbon particles is an added amount (parts by weight) relative to 100 parts by weight of amorphous inorganic material. | | | | | | | | | | | |

The coat layer of Example 1 contained residual carbon particles, and small pores having a small average pore size were dispersed therein. The thermal shock test did not cause separation of the coat layer. The obtained coat layer was excellent in thermal insulation with a low thermal conductivity.

In contrast, the coat layer of Comparative Example 1 did not contain residual carbon particles, and the average pore size was larger. In addition, the thermal shock test caused separation of the coat layer. The thermal conductivity of the coat layer was high.

### REFERENCE SIGNS LIST

- 1: coated metal member
- 12: coat layer
- 13: pores
- 14: carbon particles
- 110: base
- 111: surface of base

## Claims

1. A coated metal member comprising:
a metal base; and
a coat layer made of an amorphous inorganic material formed on the metal base,
the coat layer containing pores and carbon particles,
wherein the amount of the carbon particles is 0.005 to 1 part by weight relative to the total 100 parts by weight of the coat layer,
wherein the pores in the coat layer have an average pore size of 0.5 to 15 µm, and
wherein the porosity of the coat layer is 10 to 60%.

2. The coated metal member according to claim 1,
wherein the carbon particles are particles of residual carbon derived from a pore-forming material used to form pores.

3. The coated metal member according to claims 1 or 2,
wherein the coat layer contains no large pores having a pore size larger than 45 µm.

4. The coated metal member according to any one of claims 1 to 3,
wherein the coat layer further contains a crystalline inorganic material, and
wherein the crystalline inorganic material content in the coat layer is 1 to 50% by weight.

5. The coated metal member according to claim 4,
wherein the crystalline inorganic material is at least one oxide selected from the group consisting of zirconia, yttria, calcia, magnesia, ceria, alumina, titania, niobium oxide, and hafnia.

6. The coated metal member according to claim 4,
wherein the crystalline inorganic material is an oxide of at least one metal selected from the group consisting of manganese, iron, cobalt, copper, chromium, and nickel.

7. The coated metal member according to any one of claims 1 to 6,
wherein the coat layer has a thickness of 50 to 1000 µm.

## Patentansprüche

1. Beschichtetes Metallelement, umfassend:
einen Metallträger; und
eine Beschichtungsschicht aus einem amorphen anorganischen Material, die auf dem Metallträger gebildet ist,
wobei die Beschichtungsschicht Poren und Kohlenstoffpartikel enthält,
wobei die Menge der Kohlenstoffpartikel 0,005 bis 1 Gewichtsteil, bezogen auf die gesamten 100 Gewichtsteile der Beschichtungsschicht, beträgt,
wobei die Poren in der Beschichtungsschicht eine durchschnittliche Porengröße von 0,5 bis 15 µm aufweisen, und
wobei die Porosität der Beschichtungsschicht 10 bis 60% beträgt.

2. Beschichtetes Metallelement nach Anspruch 1,
wobei die Kohlenstoffpartikel Partikel von Restkohlenstoff sind, die sich von einem porenbildenden Material ableiten, das zur Porenbildung verwendet wird.

3. Beschichtetes Metallelement nach Anspruch 1 oder 2,
wobei die Beschichtungsschicht keine großen Poren mit einer Porengröße größer als 45 µm enthält.

4. Beschichtetes Metallelement nach einem der Ansprüche 1 bis 3,
wobei die Beschichtungsschicht weiterhin ein kristallines anorganisches Material enthält, und
wobei der Gehalt an kristallinem anorganischem Material in der Beschichtungsschicht 1 bis 50 Gew.-% beträgt.

5. Beschichtetes Metallelement nach Anspruch 4,
wobei das kristalline anorganische Material mindestens ein Oxid ist, das ausgewählt ist aus der Gruppe bestehend aus Zirconiumdioxid, Yttriumoxid, Calciumoxid, Magnesiumoxid, Cerdioxid, Aluminiumoxid, Titandioxid, Nioboxid und Hafniumoxid.

6. Beschichtetes Metallelement nach Anspruch 4,
wobei das kristalline anorganische Material ein Oxid von mindestens einem Metall ist, das ausgewählt ist aus der Gruppe bestehend aus Mangan, Eisen, Kobalt, Kupfer, Chrom und Nickel.

7. Beschichtetes Metallelement nach einem der Ansprüche 1 bis 6,
wobei die Beschichtungsschicht eine Dicke von 50 bis 1000 µm aufweist.

## Revendications

1. Elément métallique revêtu comprenant :
une base métallique ; et
une couche de revêtement faite d'un matériau inorganique amorphe formée sur la base métallique,
la couche de revêtement contenant des pores et des particules de carbone,
dans lequel la quantité des particules de carbone est de 0,005 à 1 partie en poids pour 100 parties en poids au total de la couche de revêtement,
dans lequel les pores dans la couche de revêtement ont une taille de pore moyenne de 0,5 à 15 µm, et
dans lequel la porosité de la couche de revêtement est de 10 à 60 %.

2. Elément métallique revêtu selon la revendication 1, dans lequel les particules de carbone sont des particules de carbone résiduel dérivé d'un matériau porogène utilisé pour la formation de pores.

3. Elément métallique revêtu selon la revendication 1 ou 2, dans lequel la couche de revêtement ne contient pas de gros pores ayant une taille de pore supérieure à 45 µm.

4. Elément métallique revêtu selon l'une quelconque des revendications 1 à 3,
dans lequel la couche de revêtement contient en outre un matériau inorganique cristallin, et
dans lequel la teneur en matériau inorganique cristallin dans la couche de revêtement est de 1 à 50 % en poids.

5. Elément métallique revêtu selon la revendication 4, dans lequel le matériau inorganique cristallin est au moins un oxyde choisi dans le groupe constitué par la zircone, l'oxyde d'yttrium, l'oxyde de calcium, la magnésie, l'oxyde de cérium, l'alumine, l'oxyde de titane, l'oxyde de niobium, et l'oxyde de hafnium.

6. Elément métallique revêtu selon la revendication 4, dans lequel le matériau inorganique cristallin est un oxyde d'au moins un métal choisi dans le groupe constitué par le manganèse, le fer, le cobalt, le cuivre, le chrome et le nickel.

7. Elément métallique revêtu selon l'une quelconque des revendications 1 à 6, dans lequel la couche de revêtement a une épaisseur de 50 à 1 000 µm.
